# FASCICULE DE BREVET EUROPEEN

(11) **EP 3 440 352 B1**
(45) Date de publication et mention de la délivrance du brevet: **01.04.2020**
(21) Numéro de dépôt: 17714833.5
(22) Date de dépôt: 06.04.2017
(51) Int. Cl.: F04B 13/02, F04B 9/107

(54) **MECANISME DE DOSAGE D'UNE POMPE, PROCEDES DE VERROUILLAGE ET DE DEVERROUILLAGE D'UN TEL MECANISME**
DOSIERVORRICHTUNG FÜR EINE PUMPE, VERFAHREN ZUM VERRIEGELN UND ENTRIEGELN SOLCH EINES MECHANISMUS
METERING MECHANISM FOR A PUMP, METHODS FOR LOCKING AND UNLOCKING SUCH A MECHANISM

(30) Priorité: 07.04.2016 FR 1653061
(43) Date de publication de la demande: 13.02.2019
(73) Titulaire: Dosatron International, 33370 Tresses (FR)
(72) Inventeur: LAATIAOUI, Najib, 33130 BEGLES (FR); MAHIEUX, Richard, 33670 CURSAN (FR)
(74) Mandataire: IPAZ
(86) Numéro de dépôt international: PCT/EP2017/058254
(87) Numéro de publication internationale: WO 2017/174722

(56) Documents cités:
- WO-A1-2015/184056
- FR-A1- 2 389 104
- US-A- 3 945 772

## Description

L'invention est relative à un mécanisme de dosage d'une pompe à dosage proportionnel du type comportant une machine hydraulique alimentée en un liquide principal et en un liquide secondaire, et un mécanisme de dosage du liquide secondaire. L'invention a également pour objet un procédé de verrouillage et de déverrouillage d'un tel mécanisme de dosage.

Les pompes à dosage proportionnel comprennent généralement une machine hydraulique. De manière classique, la machine hydraulique s'étend suivant un axe longitudinal, et est dotée d'une entrée, d'une sortie, d'une tubulure d'accès à une chambre de mélange, ainsi que d'un mécanisme de dosage. Ce mécanisme de dosage est muni d'un clapet d'aspiration et communique en l'une de ses extrémités avec la chambre de mélange intérieure à la pompe et en l'autre de ses extrémités avec un contenant de produit à aspirer. La machine hydraulique est dotée d'un organe propre à effectuer un mouvement alternatif, l'alimentation de la pompe en liquide en entrée déclenchant le mouvement alternatif de l'organe, lequel mouvement provoquant alternativement une aspiration à travers le mécanisme de dosage jusque dans la chambre de mélange avec ouverture du premier clapet d'aspiration lorsque l'organe s'éloigne du mécanisme de dosage puis une expulsion en sortie de la pompe avec fermeture du premier clapet d'aspiration lorsque l'organe se rapproche du mécanisme de dosage.

Selon le document US 3 945 772 A qui porte sur pompe pour le pompage de petites quantités de liquides dosés, il est prévu un moyens pour activer le blocage de la rotation d'un écrou de réglage, de sorte que quand on fait tourner le manchon jusqu'à ce qu'il atteigne la surface extérieure conique de l'écrou de réglage, la rotation entre l'écrou de réglage et le corps du mécanisme de dosage est bloqué. Toutefois, aucun écrou de verrouillage ne sécurise la position de l'écrou de réglage.

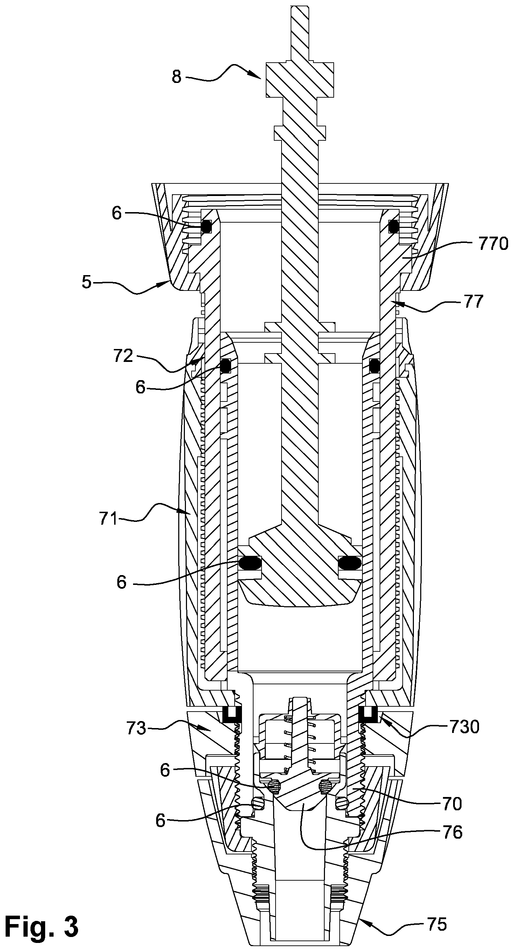

Selon un autre exemple décrit en figure 3, il est représenté en particulier un mécanisme de dosage de l'art antérieur 7 capable d'ajuster le volume aspiré par ledit mécanisme. Ce mécanisme de dosage 7 comprend un corps 70 monté en translation dans une chemise 77, elle-même montée dans un écrou de réglage 71. Ledit écrou de réglage coopère en vissage avec ladite chemise, ledit vissage occasionnant alors une rotation de l'écrou de réglage par rapport au corps du mécanisme de dosage. Le corps est prolongé par un siège de clapet 75 pouvant être obturé par un clapet 76 et étant apte à accueillir un plongeur 8 dont le mouvement alternatif permet au moins une aspiration au niveau du siège de clapet. La course du plongeur 8 dépend donc de la position de vissage de la chemise par rapport à l'écrou de réglage. Il s'ensuit que le volume aspiré dans le contenant lors de l'ouverture du clapet 76 est plus ou moins important selon la position de vissage de la chemise par rapport à l'écrou de réglage. Le volume d'eau pour un cycle étant quasi-constant, le dosage est plus ou moins important selon le volume aspiré dans le contenant.

Le mécanisme de dosage comprend en outre des étanchéités 6 entre le corps et la chemise, entre l'extrémité du plongeur et le corps et au niveau du raccordement avec la chambre de mélange de la machine hydraulique. Le raccordement s'effectue notamment au moyen d'un écrou 5 monté sur un épaulement 770 de la chemise 77.

Afin de bloquer la rotation de l'écrou de réglage 71 par rapport au corps 70 une bague de blocage 73 montée sur le corps 70 est vissée contre l'écrou de réglage via la butée 730. La butée 730 maintient plaqué l'écrou de réglage 71 contre un épaulement ménagé sur le corps 70, de ce fait, l'écrou de réglage est bloqué en rotation. La butée 730 permet d'entraîner le corps 70 vers le bas quand on veut descendre le corps 70 sans bloquer l'écrou de réglage 71 sur la bague de verrouillage 73. Elle sert aussi à empêcher que l'écrou de réglage 71 ne vienne contre la bague 73.

Toutefois, ce type de verrouillage présente à l'usage un manque de fiabilité due au fait que l'utilisateur ne sait pas jusqu'où aller pour déverrouiller le mécanisme, ce qui peut entraîner un démontage de la bague de verrouillage. De plus, le verrouillage du mécanisme dépend du serrage de l'utilisateur, ce qui rend le dosage imprécis.

C'est pourquoi, l'objet de l'invention est de palier tout ou partie des inconvénients énoncés précédemment en proposant un dispositif et un procédé de montage et de démontage, permettant d'empêcher la désolidarisation involontaire entre l'ajutage du mécanisme de dosage et la machine hydraulique.

Plus particulièrement, l'invention a pour objet un mécanisme de dosage comprenant un corps monté en translation dans une chemise elle-même montée dans un écrou de réglage , ledit écrou de réglage étant apte à coopérer en vissage avec ladite chemise, ledit vissage occasionnant alors une rotation de l'écrou de réglage par rapport au corps du mécanisme de dosage, ledit corps étant prolongé par un siège de clapet pouvant être obturé par un clapet et étant apte à accueillir un plongeur dont le mouvement alternatif permet une aspiration au niveau du clapet, la course du plongeur étant fonction de la position de vissage entre l'écrou de réglage et la chemise, caractérisé en ce que le mécanisme de dosage comprend en outre des moyens pour activer le blocage de la rotation entre l'écrou de réglage et le corps du mécanisme de dosage de manière à interdire le vissage et le dévissage entre l'écrou de réglage et la chemise, lesdits moyens comportant une bague logée dans un écrou de verrouillage monté en rotation autour du corps du mécanisme, ladite bague coopérant en vissage avec ledit écrou, ladite bague étant montée en translation autour et le long du corps du mécanisme de dosage entre une première position de butée au fond de de l'écrou de verrouillage et une seconde position de butée contre l'écrou de réglage impliquant le blocage en rotation de l'écrou de réglage rendu solidaire par complémentarité de forme avec la bague.

Des caractéristiques optionnelles de l'invention, complémentaires ou de substitution sont énoncées ci-après.

La bague peut être montée en translation le long du corps du mécanisme de dosage au moyen d'une liaison glissière réalisée au moyen d'au moins d'un ergot ménagé sur la surface circonférentielle intérieure de la bague, ledit ergot étant apte à coulisser dans une rainure pratiquée sur la surface circonférentielle extérieure du corps.

La bague peut être montée en translation le long du corps du mécanisme de dosage au moyen d'une liaison glissière réalisée au moyen d'au moins d'une nervure ménagée sur la surface circonférentielle extérieure du corps, ladite nervure étant apte à coulisser dans une rainure pratiquée dans la surface circonférentielle intérieure de la bague.

La bague peut coopérer en vissage avec l'écrou de verrouillage au moyen d'un curseur ménagé sur la surface circonférentielle extérieure de la bague, ledit curseur étant apte à coulisser suivant une hélice pratiquée sur la surface circonférentielle intérieure de l'écrou de verrouillage.

La bague peut coopérer en vissage avec l'écrou de verrouillage au moyen d'un curseur ménagé sur la surface circonférentielle intérieure de l'écrou de verrouillage, ledit curseur étant apte à coulisser suivant une hélice pratiquée sur la surface circonférentielle extérieure de la bague.

Le blocage en rotation par complémentarité de forme de la bague contre l'écrou de réglage peut s'effectuer au moyen d'un crabotage ménagé entre une face de la bague et un épaulement de l'écrou de réglage, en regard l'un de l'autre.

Les moyens pour activer le blocage de la rotation entre l'écrou de réglage et le corps du mécanisme de dosage, peuvent comprendre en outre un circlips apte à bloquer en translation l'écrou de verrouillage par rapport au corps du mécanisme de dosage.

Le mécanisme peut comprendre des moyens d'affichage du dosage ménagés sur la surface circonférentielle extérieure de la chemise.

Le mécanisme peut comprendre des moyens d'étanchéité interposés entre le corps et la chemise.

La chemise peut comprendre un épaulement apte à retenir un écrou de fixation sur une machine hydraulique.

L'invention a également pour objet une pompe à dosage proportionnel comprenant une machine hydraulique dotée d'une entrée et d'une sortie , un mécanisme de dosage communiquant en l'une de ses extrémités avec une tubulure d'accès à une chambre de mélange intérieure à la pompe et en l'autre de ses extrémités avec un réservoir de produit à doser, la machine hydraulique s'étendant suivant un axe longitudinal et renfermant un organe propre à effectuer un mouvement alternatif, l'alimentation de la pompe en liquide en entrée déclenchant le mouvement alternatif de l'organe, lequel mouvement provoquant alternativement une aspiration à travers le mécanisme de dosage jusque dans la chambre de mélange avec ouverture d'un clapet d'aspiration lorsque l'organe s'éloigne du mécanisme de dosage puis une expulsion en sortie de la pompe avec fermeture du clapet d'aspiration lorsque l'organe se rapproche du mécanisme de dosage, caractérisée en ce que le mécanisme de dosage est conforme à l'un des modes de réalisation de l'invention.

L'invention a également pour objet un procédé de verrouillage d'un mécanisme de dosage conforme à l'un des modes de réalisation de l'invention caractérisé en ce que :
- On fait tourner l'écrou de réglage jusqu'à sélectionner le dosage souhaité,
- On active les moyens en tournant l'écrou de verrouillage afin d'amener la bague dans sa seconde position de butée contre l'écrou de réglage afin de bloquer en rotation par complémentarité de forme l'écrou de réglage.

L'invention a également pour objet un procédé de déverrouillage d'un mécanisme de dosage conforme à l'un des modes de réalisation de l'invention, caractérisé en ce qu'on désactive les moyens en tournant l'écrou de verrouillage afin d'amener la bague dans sa première position de butée désengagée de l'écrou de réglage, afin de rendre libre en rotation l'écrou de réglage vis-à-vis de la bague.

D'autres avantages et particularités de l'invention apparaîtront à la lecture de la description détaillée de mises en œuvre et de modes de réalisation nullement limitatifs, et des dessins annexés suivants :
- la FIGURE 1 est une représentation schématique d'une pompe à dosage proportionnel utilisant un premier type de machine hydraulique.
- la FIGURE 2 est une représentation schématique d'une pompe à dosage proportionnel utilisant un second type de machine hydraulique.
- la FIGURE 3 est une représentation d'une vue détaillée d'un mécanisme de dosage de l'art antérieur.
- la FIGURE 4 est une vue éclatée suivant un point de vue en perspective d'un mécanisme de dosage selon l'invention.
- la FIGURE 5 est une vue éclatée suivant un autre point de vue en perspective d'un mécanisme de dosage selon l'invention.
- la FIGURE 6 est une vue en coupe suivant l'axe longitudinal d'un mécanisme de dosage selon l'invention.

Les modes de réalisation décrits ci-après étant nullement limitatifs, on pourra notamment considérer des variantes de l'invention ne comprenant qu'une sélection de caractéristiques décrites, isolées des autres caractéristiques décrites (même si cette sélection est isolée au sein d'une phrase comprenant ces autres caractéristiques), si cette sélection de caractéristiques est suffisante pour conférer un avantage technique ou pour différencier l'invention par rapport à l'état de la technique antérieure et si elle ne sort pas du cadre de l'invention tel que défini par les revendications. Cette sélection comprend au moins une caractéristique, de préférence fonctionnelle sans détails structurels, ou avec seulement une partie des détails structurels si cette partie uniquement est suffisante pour conférer un avantage technique ou pour différencier l'invention par rapport à l'état de la technique antérieure.

A des fins de concision et de clarté, les éléments portent les mêmes références sur les différentes figures.

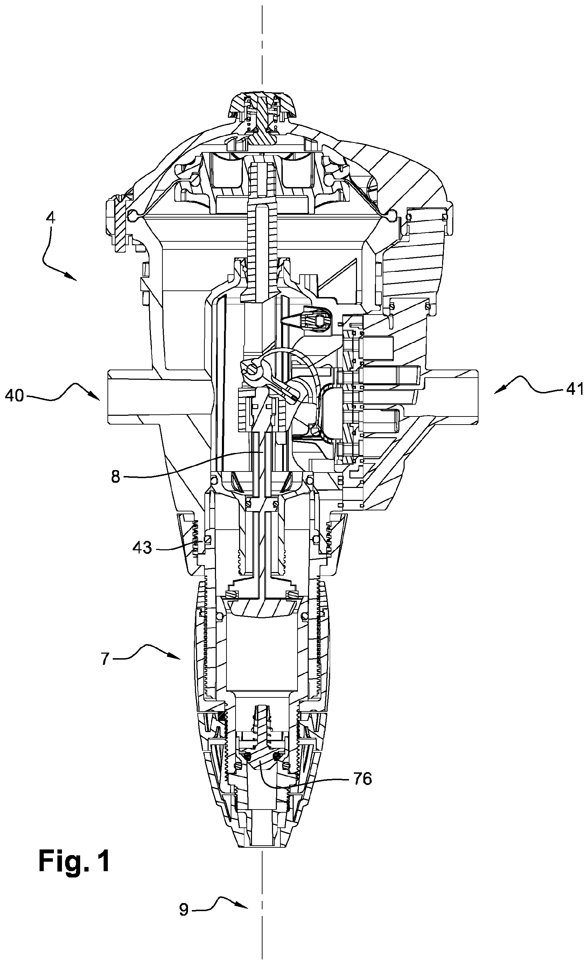

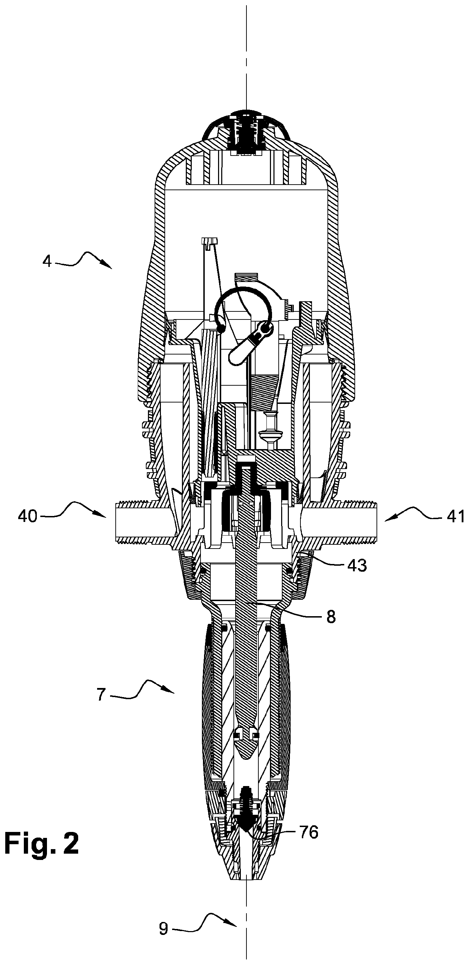

Les figures 1 et 2 représentent chacune un mode de réalisation d'une pompe à dosage proportionnel. Elle comporte une machine hydraulique 4 s'étendant suivant un axe longitudinal 9, et dotée d'une entrée 40, d'une sortie 41, une tubulure d'accès à une chambre de mélange 43, ainsi que d'un mécanisme de dosage 7. Ce mécanisme de dosage 7 est muni d'un clapet d'aspiration 76 et communique en l'une de ses extrémités avec une chambre de mélange intérieure à la pompe et en l'autre de ses extrémités avec un contenant de produit à aspirer (non représenté sur la figure).

La machine hydraulique est doté d'un organe propre à effectuer un mouvement alternatif, l'alimentation de la pompe en liquide en entrée déclenchant le mouvement alternatif de l'organe, lequel mouvement provoquant alternativement une aspiration à travers le mécanisme de dosage jusque dans la chambre de mélange avec ouverture du clapet d'aspiration 76 lorsque l'organe s'éloigne du mécanisme de dosage puis une expulsion en sortie 41 de la pompe avec fermeture du clapet d'aspiration lorsque l'organe se rapproche du mécanisme de dosage.

La machine hydraulique peut être du type de celui décrit dans le document EP1971776 A1 et représenté sur la figure 1.

Cette machine hydraulique comprend une enveloppe comportant un corps et un couvercle, un moyen de séparation propre à effectuer un mouvement alternatif dans l'enveloppe entre le corps et le couvercle, ce moyen de séparation définissant deux chambres. La machine hydraulique comprend aussi des moyens de commutation hydraulique pour l'alimentation en liquide et l'évacuation des chambres précitées.

Ces moyens de commutation comprennent un organe de distribution pouvant prendre deux positions stables et commandé par les déplacements du moyen de séparation. Le corps de l'enveloppe renferme par ailleurs un compartiment relié à une arrivée de liquide sous pression et dans lequel sont logés les moyens de commutation, ainsi que des moyens de déclenchement comprenant un poussoir lié au moyen de séparation, propres à provoquer, en fin de course, un changement brusque de la position des moyens de commutation, sous l'action d'un moyen élastique, pour l'inversion de la course.

L'organe de distribution comprend un tiroir de distribution appliqué contre une plaque plane fixe relativement au corps de l'enveloppe, le tiroir de distribution pouvant coulisser de manière étanche, sans joint, contre la plaque qui comporte des orifices reliés respectivement aux chambres de l'enveloppe et à un orifice de sortie du liquide. Le tiroir est alors prévu pour, selon sa position, fermer certains des orifices ou les mettre en communication avec l'arrivée de fluide ou avec l'échappement.

La machine hydraulique peut être aussi du type de celui décrit dans le document EP1971774 A1 et représenté sur la figure 2.

Dans ce cas, la machine hydraulique comprend une enveloppe, un piston propre à coulisser en mouvement alternatif dans l'enveloppe, le piston séparant l'enveloppe en deux chambres, des moyens de commutation hydraulique pour l'alimentation en liquide et l'évacuation des chambres séparées par le piston.

Ces moyens de commutation sont commandés par les déplacements du piston et comportent au moins une biellette agissant sur un organe de distribution pouvant prendre deux positions stables. Il est en outre prévu des moyens de déclenchement comprenant un poussoir propre à provoquer, en fin de course du piston, un changement brusque de la position des moyens de commutation, sous l'action d'un moyen élastique, pour l'inversion de la course. Le moyen élastique est solidaire, à chacune de ses extrémités, d'un organe d'articulation reçu respectivement dans un logement prévu sur la biellette et sur une autre pièce mobile de la machine hydraulique, chaque logement étant ouvert suivant une direction sensiblement opposée au sens de l'effort exercé par le moyen élastique dans le logement, de sorte que chaque organe d'articulation peut être extrait de son logement ouvert à l'encontre dudit effort.

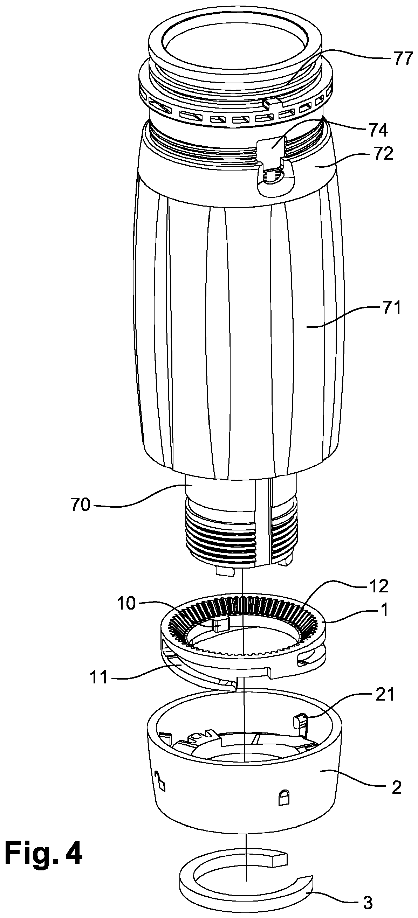

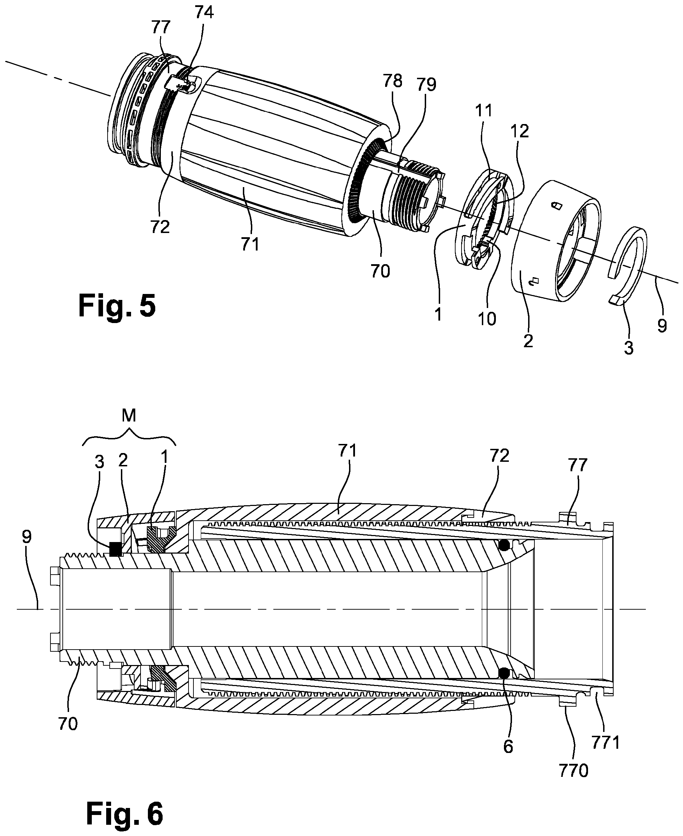

Tel que représenté plus en détail sur les figures 4, 5 et 6, la pompe à dosage proportionnel comprend également un mécanisme de dosage 7 comprenant un corps 70 de forme sensiblement cylindrique et s'étendant suivant l'axe 9 de la machine hydraulique. Sur ce corps sont montés successivement une chemise 77 et un écrou de réglage 71.

Le raccordement du mécanisme de dosage 7 avec la machine hydraulique s'effectue comme sur la figure 3, c'est-à-dire notamment au moyen d'un écrou 5 monté sur un épaulement 770 de la chemise 77, c'est dernière étant ainsi rendue fixe par rapport à la machine hydraulique.

Le corps 70 est monté en translation seulement, dans la chemise 77, de sorte que le corps 70 ne peut que coulisser dans la chemise. La translation peut être assurée par la coopération de nervures et de rainures respectivement ménagées sur la surface circonférentielle intérieure de la chemise et sur la surface circonférentielle extérieure du corps 70. Le blocage en rotation du corps 70 par rapport à la chemise peut aussi être assuré par une clavette.

L'écrou de réglage est apte à coopérer en vissage avec ladite chemise, ledit vissage occasionnant alors une rotation de l'écrou de réglage par rapport au corps du mécanisme de dosage.

On entend par vissage un déplacement dans un espace affine euclidien qui est la composée commutative d'une rotation et d'une translation selon un vecteur dirigeant l'axe de rotation (en l'occurrence l'axe 9). Ainsi, la coopération en vissage de deux pièces doit être entendue au sens large et ne doit pas se limiter à la seule coopération de filetage entre les deux pièces.

Le corps est prolongé par un siège de clapet (non représenté sur les figures) pouvant être obturé par un clapet (également non représenté sur les figures). Le corps est apte à accueillir un plongeur dont le mouvement alternatif permet une aspiration au niveau du siège de clapet. La course du plongeur est fonction de la position de vissage entre l'écrou de réglage et la chemise.

Le mécanisme de dosage comprend en outre des moyens M pour activer le blocage de la rotation entre l'écrou de réglage et le corps du mécanisme de dosage de manière à interdire le vissage et le dévissage entre l'écrou de réglage et la chemise.

Les moyens de blocage comportent une bague 1 logée dans un écrou de verrouillage 2 monté en rotation autour du corps 70. La bague 1 est apte à coopérer en vissage avec l'écrou 2. La bague est montée en translation autour du corps du mécanisme de dosage et admet une latitude de mouvement en translation entre une première position de butée à l'intérieur de l'écrou de verrouillage et une seconde position de butée contre l'écrou de réglage impliquant le blocage en rotation par complémentarité de forme de la bague par rapport à l'écrou de réglage.

La translation de la bague le long du corps du mécanisme de dosage est réalisée selon un mode de réalisation particulier, au moyen d'une liaison glissière réalisée au moyen d'au moins un ergot 10 ménagé sur la surface circonférentielle intérieure de la bague, ledit ergot étant apte à coulisser dans une rainure 79 pratiquée sur la surface circonférentielle extérieure du corps.

Selon une variante, la bague est montée en translation le long du corps du mécanisme de dosage au moyen d'une liaison glissière réalisée au moyen d'au moins une nervure ménagée sur la surface circonférentielle extérieure du corps, ladite nervure étant apte à coulisser dans une rainure pratiquée dans la surface circonférentielle intérieure de la bague.

La coopération de la bague en vissage avec l'écrou de verrouillage s'effectue selon un mode de réalisation particulier au moyen d'un curseur ménagé sur la surface circonférentielle extérieure de la bague, ledit curseur étant apte à coulisser suivant une hélice pratiquée sur la surface circonférentielle intérieure de l'écrou de verrouillage.

Selon une variante, la bague coopère en vissage avec l'écrou de verrouillage au moyen d'un curseur 21 ménagé sur la surface circonférentielle intérieure de l'écrou de verrouillage, ledit curseur étant apte à coulisser suivant une hélice 11 pratiquée sur la surface circonférentielle extérieure de la bague.

Le blocage en rotation par complémentarité de forme de la bague contre l'écrou de réglage s'effectue au moyen d'un crabotage ménagé entre une face 12 de la bague et un épaulement 78 de l'écrou de réglage, en regard l'un de l'autre. On entend par crabot, tout dispositif à dents permettant de coupler deux pièces mécaniques.

Avantageusement, les moyens M pour activer le blocage de la rotation entre l'écrou de réglage et le corps du mécanisme de dosage, comprennent en outre un circlips 3 qui permet de bloquer en translation l'écrou de verrouillage par rapport au corps du mécanisme de dosage.

Avantageusement, le mécanisme de dosage comprend des moyens d'affichage 74 du dosage ménagés sur la surface circonférentielle extérieure de la chemise et pouvant consister en une réglette graduée imprimée ou gravée sur ladite surface circonférentielle extérieure. Ces moyens d'affichage coopèrent avec une bague de visualisation 72 permettant de pointer la graduation de la réglette.

Avantageusement, le mécanisme de dosage comprend des moyens d'étanchéité 6 interposés entre le corps 70 et la chemise 77.

Le montage du mécanisme de dosage sur la machine hydraulique s'effectue au moyen d'un écrou (non représenté sur les figures 4 à 6), qui vient en butée sur un épaulement 770. L'étanchéité est alors réalisée au moyen d'un joint logé dans une gorge 771 ménagée sur la surface circonférentielle extérieure de la chemise. L'intérieur du corps du mécanisme de dosage communique ainsi avec la chambre de mélange de la machine hydraulique.

Concernant maintenant le procédé de verrouillage d'un mécanisme de dosage conforme à l'un des modes de réalisation de l'invention, on fait tourner tout d'abord l'écrou de réglage 71 jusqu'à sélectionner le dosage souhaité, puis on active les moyens de blocage M en tournant l'écrou de verrouillage 2 afin d'amener la bague 1 dans sa seconde position de butée contre l'écrou de réglage afin de bloquer en rotation par complémentarité de forme l'écrou de réglage.

Pour déverrouiller le mécanisme de dosage, on désactive les moyens de blocage M en tournant l'écrou de verrouillage 2 afin d'amener la bague 1 dans sa première position de butée désengagée de l'écrou de réglage. L'écrou de réglage est de nouveau libre en rotation vis-à-vis de la bague 1, et donc vis-à-vis du corps 70.

Bien sûr, l'invention n'est pas limitée aux exemples qui viennent d'être décrits et de nombreux aménagements peuvent être apportés à ces exemples sans sortir du cadre de l'invention tel que défini par les revendications. De plus, les différentes caractéristiques, formes, variantes et modes de réalisation de l'invention peuvent être associés les uns avec les autres selon diverses combinaisons dans la mesure où ils ne sont pas incompatibles ou exclusifs les uns des autres et ils ne sortent pas du cadre de l'invention tel que défini par les revendications.

## Revendications

1. Mécanisme de dosage (7) comprenant un corps (70) monté en translation dans une chemise (77) elle-même montée dans un écrou de réglage (71) , ledit écrou de réglage étant apte à coopérer en vissage avec ladite chemise, ledit vissage occasionnant alors une rotation de l'écrou de réglage par rapport au corps du mécanisme de dosage, ledit corps étant prolongé par un siège de clapet (75) pouvant être obturé par un clapet (76) et étant apte à accueillir un plongeur (8) dont le mouvement alternatif permet au moins une aspiration au niveau du clapet (76), la course du plongeur étant fonction de la position de vissage entre l'écrou de réglage et la chemise, le mécanisme de dosage comprenant en outre des moyens (M) pour activer le blocage de la rotation entre l'écrou de réglage (71) et le corps du mécanisme de dosage (70) de manière à interdire le vissage et le dévissage entre l'écrou de réglage et la chemise, **caractérisé en ce que** lesdits moyens comportent une bague (1) logée dans un écrou de verrouillage (2) monté en rotation autour du corps (70), ladite bague coopérant en vissage avec ledit écrou de verrouillage, ladite bague étant montée en translation uniquement autour et le long du corps du mécanisme de dosage entre une première position de butée au fond de l'écrou de verrouillage et une seconde position de butée contre l'écrou de réglage impliquant le blocage en rotation de l'écrou de réglage rendu solidaire par complémentarité de forme avec la bague.

2. Mécanisme de dosage selon la revendication 1, **caractérisé en ce que** la bague est montée en translation le long du corps du mécanisme de dosage au moyen d'une liaison glissière réalisée au moyen d'au moins un ergot (10) ménagé sur la surface circonférentielle intérieure de la bague, ledit ergot étant apte à coulisser dans une rainure (79) pratiquée sur la surface circonférentielle extérieure du corps.

3. Mécanisme de dosage selon la revendication 1, **caractérisé en ce que** la bague est montée en translation le long du corps du mécanisme de dosage au moyen d'une liaison glissière réalisée au moyen d'au moins une nervure ménagée sur la surface circonférentielle extérieure du corps, ladite nervure étant apte à coulisser dans une rainure pratiquée dans la surface circonférentielle intérieure de la bague.

4. Mécanisme de dosage selon l'une quelconque des revendications précédentes, **caractérisé en ce que** la bague coopère en vissage avec l'écrou de verrouillage au moyen d'un curseur ménagé sur la surface circonférentielle extérieure de la bague, ledit curseur étant apte à coulisser suivant une hélice pratiquée sur la surface circonférentielle intérieure de l'écrou de verrouillage.

5. Mécanisme de dosage selon l'une quelconque des revendications 1 à 3, **caractérisé en ce que** la bague coopère en vissage avec l'écrou de verrouillage au moyen d'un curseur (21) ménagé sur la surface circonférentielle intérieure de l'écrou de verrouillage, ledit curseur étant apte à coulisser suivant une hélice (11) pratiquée sur la surface circonférentielle extérieure de la bague.

6. Mécanisme de dosage selon l'une quelconque des revendications précédentes, **caractérisé en ce que** le blocage en rotation par complémentarité de forme de la bague contre l'écrou de réglage s'effectue au moyen d'un crabotage ménagé entre une face (12) de la bague et un épaulement (78) de l'écrou de réglage, en regard l'un de l'autre.

7. Mécanisme de dosage selon l'une quelconque des revendications précédentes, **caractérisé en ce que** les moyens (M) pour activer le blocage de la rotation entre l'écrou de réglage et le corps du mécanisme de dosage, comprennent en outre un circlips (3) apte à bloquer en translation l'écrou de verrouillage par rapport au corps du mécanisme de dosage.

8. Mécanisme de dosage selon l'une quelconque des revendications précédentes, **caractérisé en ce que** le mécanisme comprend des moyens d'affichage du dosage ménagés sur la surface circonférentielle extérieure de la chemise, ces moyens mettant en œuvre une réglette graduée (74) imprimée ou gravée sur la surface circonférentielle extérieure de la chemise et une bague de visualisation (72) permettant de pointer la graduation de la réglette.

9. Mécanisme de dosage selon l'une quelconque des revendications précédentes, **caractérisé en ce que** le mécanisme comprend des moyens d'étanchéité (6) interposés entre le corps et la chemise.

10. Mécanisme de dosage selon l'une quelconque des revendications précédentes, **caractérisé en ce que** la chemise comprend un épaulement (770) apte à retenir un écrou de fixation (5) sur une machine hydraulique.

11. Pompe à dosage proportionnel comprenant une machine hydraulique (4) dotée d'une entrée (40) et d'une sortie (41), un mécanisme de dosage (7) communiquant en l'une de ses extrémités avec une tubulure d'accès à une chambre de mélange intérieure à la pompe et en l'autre de ses extrémités avec un réservoir de produit à doser, la machine hydraulique s'étendant suivant un axe longitudinal (9) et renfermant un organe propre à effectuer un mouvement alternatif, l'alimentation de la pompe en liquide en entrée déclenchant le mouvement alternatif de l'organe, lequel mouvement provoquant alternativement une aspiration à travers le mécanisme de dosage jusque dans la chambre de mélange avec ouverture d'un clapet d'aspiration (76) lorsque l'organe s'éloigne du mécanisme de dosage puis une expulsion en sortie (41) de la pompe avec fermeture du clapet d'aspiration lorsque l'organe se rapproche du mécanisme de dosage, **caractérisée en ce que** le mécanisme de dosage (7) est conforme à l'une quelconque des revendications 1 à 10.

12. Procédé de verrouillage d'un mécanisme de dosage conforme à l'une quelconques des revendications 1 à 10, **caractérisé en ce que** :
- On fait tourner l'écrou de réglage (71) jusqu'à sélectionner le dosage souhaité,
- On active les moyens (M) en tournant l'écrou de verrouillage (2) afin d'amener la bague (1) dans sa seconde position de butée contre l'écrou de réglage afin de bloquer en rotation par complémentarité de forme l'écrou de réglage (71).

13. Procédé de déverrouillage d'un mécanisme de dosage conforme à l'une quelconques des revendications 1 à 10, **caractérisé en ce qu'**on désactive les moyens (M) en tournant l'écrou de verrouillage (2) afin d'amener la bague (1) dans sa première position de butée désengagée de l'écrou de réglage, afin de rendre libre en rotation l'écrou de réglage (71) vis-à-vis de la bague.

## Patentansprüche

1. Dosiermechanismus (7) mit einem Körper (70), der verschiebbar in einem Zylinder (77) angebracht ist, welcher seinerseits in einer Stellmutter (71) angebracht ist, wobei die Stellmutter geeignet ist, mit dem Zylinder durch Schrauben zusammenzuwirken, wobei das Schrauben eine Drehung der Stellmutter in Bezug auf den Körper des Dosiermechanismus bewirkt, wobei der Körper durch einen Ventilsitz (75) verlängert ist, der durch ein Ventil (76) schließbar ist und geeignet ist, einen Kolben (8) aufzunehmen, dessen hin- und hergehende Bewegung zumindest ein Ansaugen an dem Ventil (76) ermöglicht, wobei der Kolbenhub von der relativen Schraubposition der Stellmutter und des Zylinders abhängt, wobei der Dosiermechanismus ferner Einrichtungen (M) aufweist, um das relative Drehen der Stellmutter (71) und des Körpers (70) des Dosiermechanismus derart zu blockieren, dass das Schrauben und das Lösen der Stellmutter und des Zylinders verhindert ist, **dadurch gekennzeichnet, dass** die Einrichtungen einen Ring (1) aufweisen, der in einer drehbar um den Körper (70) angebrachten Sicherungsmutter (2) aufgenommen ist, wobei der Ring mit der Sicherungsmutter durch Schrauben zusammenwirkt, wobei der Ring zwischen einer ersten Anschlagposition am Boden der Sicherungsmutter und einer zweiten Anschlagposition an der Stellmutter, welche eine Dreharretierung der durch Formschluss mit dem Ring verbundenen Stellmutter impliziert, ausschließlich um und entlang dem Körper des Dosiermechanismus verschiebbar angebracht ist.

2. Dosiermechanismus nach Anspruch 1, **dadurch gekennzeichnet, dass** der Ring mittels einer Gleitverbindung, die durch mindestens einen auf der Innenumfangsfläche des Rings ausgebildeten Vorsprung (10) gebildet ist, entlang dem Körper des Dosiermechanismus verschiebbar angebracht ist, wobei der Vorsprung geeignet ist, in einer Nut (79) zu gleiten, die in der Außenumfangsfläche des Körpers ausgebildet ist.

3. Dosiermechanismus nach Anspruch 1, **dadurch gekennzeichnet, dass** der Ring mittels einer Gleitverbindung, die durch mindestens eine auf der Außenumfangsfläche des Rings ausgebildete Rippe gebildet ist, entlang dem Körper des Dosiermechanismus verschiebbar angebracht ist, wobei die Rippe geeignet ist, in einer Nut zu gleiten, die in der Innenumfangsfläche des Körpers ausgebildet ist.

4. Dosiermechanismus nach einem der vorhergehenden Ansprüche, **dadurch gekennzeichnet, dass** der Ring mit der Sicherungsmutter mittels eines auf der Außenumfangsfläche des Rings gebildeten Schiebers durch Schrauben zusammenwirkt, wobei der Schieber geeignet ist, entlang einer auf der Innenumfangsfläche der Sicherungsmutter ausgebildeten Schraubenlinie zu gleiten.

5. Dosiermechanismus nach einem der Ansprüche 1 bis 3, **dadurch gekennzeichnet, dass** der Ring mit der Sicherungsmutter mittels eines auf der Innenumfangsfläche des Rings gebildeten Schiebers (21) durch Schrauben zusammenwirkt, wobei der Schieber geeignet ist, entlang einer auf der Außenumfangsfläche der Sicherungsmutter ausgebildeten Schraubenlinie (11) zu gleiten.

6. Dosiermechanismus nach einem der vorhergehenden Ansprüche, **dadurch gekennzeichnet, dass** die durch Formschluss des Rings mit der Stellmutter bewirkte Dreharretierung durch eine Kupplung erfolgt, die zwischen einer Fläche (12) des Rings und einer Schulter (78) der Stellmutter vorgesehen ist, die einander zugewandt sind.

7. Dosiermechanismus nach einem der vorhergehenden Ansprüche, **dadurch gekennzeichnet, dass** die Einrichtungen (M) zur Aktivierung der Dreharretierung zwischen der Stellmutter und dem Körper des Dosiermechanismus ferner einen Sprengring (3) aufweisen, der geeignet ist, das Verschieben der Sicherungsschraube in Bezug auf den Körper des Dosiermechanismus zu blockieren.

8. Dosiermechanismus nach einem der vorhergehenden Ansprüche, **dadurch gekennzeichnet, dass** der Mechanismus Dosisanzeigeeinrichtungen aufweist, die auf der Außenumfangsfläche des Zylinders vorgesehen sind, wobei diese Einrichtungen eine auf die Außenumfangsfläche des Zylinders aufgedruckte oder in diese eingravierte Skalenleiste (74) und einen Visualisierungsring (72) implementieren, der die Skala der Leiste zeigt.

9. Dosiermechanismus nach einem der vorhergehenden Ansprüche, **dadurch gekennzeichnet, dass** der Mechanismus zwischen dem Körper und dem Zylinder angeordnete Dichteinrichtungen (6) aufweist.

10. Dosiermechanismus nach einem der vorhergehenden Ansprüche, **dadurch gekennzeichnet, dass** der Zylinder eine Schulter (770) aufweist, die geeignet ist, eine Befestigungsmutter (5) an einer hydraulischen Maschine zu halten.

11. Proportional-Dosierpumpe mit einer hydraulischen Maschine (4), die mit einem Einlass (40) und einem Auslass (41) versehen ist, sowie mit einem Dosiermechanismus (7), der an einem seiner Enden mit einem Zugangsrohr zu einer Mischkammer im Inneren der Pumpe und an dem anderen seiner Enden mit einem Reservoir für das zu dosierende Produkt verbunden ist, wobei die hydraulische Maschine sich entlang einer Längsachse (9) erstreckt und ein Organ einschließt, das geeignet ist, eine hin und her gehende Bewegung zu bewirken, wobei die Versorgung der Pumpe mit Flüssigkeit am Einlass (40) die hin und her gehende Bewegung des Organs auslöst, wobei diese Bewegung abwechselnd ein Ansaugen über den Dosiermechanismus aus der Mischkammer unter Öffnen eines Ansaugventils (76) bewirkt, wenn sich das Organ von dem Dosiermechanismus entfernt, und anschließend ein Austreiben am Auslass (41) der Pumpe unter Schließen des Ansaugventils bewirkt, wenn Organ sich dem Dosiermechanismus nähert, **dadurch gekennzeichnet, dass** der Dosiermechanismus (7) einem der Ansprüche 1 bis 10 entspricht.

12. Verfahren zum Sperren eines Dosiermechanismus nach einem der Ansprüche 1 bis 10, **gekennzeichnet durch**
- das Drehen der Stellmutter (71) bis die gewünschte Dosis gewählt ist,
- das Aktivieren der Einrichtungen (M) durch Drehen der Sperrmutter (2), um den Ring (1) in seine zweite Anschlagposition an der Stellmutter zu bewegen, um das Drehen der Stellmutter (71) durch Formschluss zu arretieren.

13. Verfahren zum Lösen eines Dosiermechanismus nach einem der Ansprüche 1 bis 10, **gekennzeichnet durch** das Deaktivieren der Einrichtungen (M) durch Drehen der Sperrmutter (2), um den Ring (1) in seine erste, von der Stellmutter gelöste Anschlagposition zu bewegen, um die Stellmutter (71) in Bezug auf den Ring frei drehbar zu machen.

## Claims

1. A metering mechanism (7) comprising a body (70) mounted to translate in a sleeve (77) which is itself mounted in an adjustment nut (71), said adjustment nut being capable of cooperating by screwing with said sleeve, said screwing then causing a rotation of the adjustment nut relative to the body of the metering mechanism, said body being extended by a valve seat (75) that can be closed by a valve (76) and that is capable of accommodating a plunger (8), the reciprocating movement of which allows at least a suction at the valve (76), the travel of the plunger being a function of the position of screwing between the adjustment nut and the sleeve, the metering mechanism also comprising means (M) for activating the blocking of the rotation between the adjustment nut (71) and the body of the metering mechanism (70) so as to prohibit the screwing and the unscrewing between the adjustment nut and the sleeve, **characterized in that** said means comprise a ring (1) housed in a locking nut (2) mounted to rotate around the body (70), said ring cooperating by screwing with said locking nut, said ring being mounted to translate only around and along the body of the metering mechanism between a first position of abutment at the bottom of the locking nut and a second position of abutment against the adjustment nut involving the rotational blocking of the adjustment nut rendered secured by complementarity of form with the ring.

2. The metering mechanism as claimed in claim 1, **characterized in that** the ring is mounted to translate along the body of the metering mechanism by means of a slide link produced by means of at least one snug (10) formed on the inner circumferential surface of the ring, said snug being capable of sliding in a groove (79) formed on the outer circumferential surface of the body.

3. The metering mechanism as claimed in claim 1, **characterized in that** the ring is mounted to translate along the body of the metering mechanism by means of a slide link produced by means of at least one rib formed on the outer circumferential surface of the body, said rib being capable of sliding in a groove formed in the inner circumferential surface of the ring.

4. The metering mechanism as claimed in any one of the preceding claims, **characterized in that** the ring cooperates by screwing with the locking nut by means of a block formed on the outer circumferential surface of the ring, said block being capable of sliding along a helix formed on the inner circumferential surface of the locking nut.

5. The metering mechanism as claimed in any one of claims 1 to 3, **characterized in that** the ring cooperates by screwing with the locking nut by means of a block (21) formed on the inner circumferential surface of the locking nut, said block being capable of sliding along a helix (11) formed on the outer circumferential surface of the ring.

6. The metering mechanism as claimed in any one of the preceding claims, **characterized in that** the rotational blocking by complementarity of form of the ring against the adjustment nut is performed by means of a claw coupling formed between a face (12) of the ring and a shoulder (78) of the adjustment nut, facing one another.

7. The metering mechanism as claimed in any one of the preceding claims, **characterized in that** the means (M) for activating the blocking of the rotation between the adjustment nut and the body of the metering mechanism further comprise a circlip (3) capable of translationally blocking the locking nut relative to the body of the metering mechanism.

8. The metering mechanism as claimed in any one of the preceding claims, **characterized in that** the mechanism comprises metering display means formed on the outer circumferential surface of the sleeve, these means implementing a graduated indicator (74) printed or etched on the outer circumferential surface of the sleeve and a viewing ring (72) making it possible to aim the graduation of the indicator.

9. The metering mechanism as claimed in any one of the preceding claims, **characterized in that** the mechanism comprises sealing means (6) interposed between the body and the sleeve.

10. The metering mechanism as claimed in any one of the preceding claims, **characterized in that** the sleeve comprises a shoulder (770) capable of retaining a fixing nut (5) on a hydraulic machine.

11. A proportional metering pump comprising a hydraulic machine (4) provided with an inlet (40) and an outlet (41), a metering mechanism (7) communicating at one of its ends with an access nozzle to a mixing chamber internal to the pump and, at the other of its ends, with a tank of product to be metered, the hydraulic machine extending along a longitudinal axis (9) and enclosing a member designed to perform a reciprocating movement, the supplying of the pump with liquid at the inlet triggering the reciprocating movement of the member, said movement alternately provoking a suction through the metering mechanism into the mixing chamber with opening of a suction valve (76) when the member moves away from the metering mechanism then an expulsion at the outlet (41) of the pump with closure of the suction valve when the member approaches the metering mechanism, **characterized in that** the metering mechanism (7) conforms to any one of claims 1 to 10.

12. A method for locking a metering mechanism as claimed in any one of claims 1 to 10, **characterized in that**:
- the adjustment nut (71) is turned to select the desired metered quantity,
- the means (M) are activated by turning the locking nut (2) in order to bring the ring (1) into its second position of abutment against the adjustment nut in order to rotationally block the adjustment nut (71) by complementarity of form.

13. A method for unlocking a metering mechanism as claimed in any one of claims 1 to 10, **characterized in that** the means (M) are deactivated by turning the locking nut (2) in order to bring the ring (1) into its first position of abutment disengaged from the adjustment nut, in order to render the adjustment nut (71) free to rotate with respect to the ring.
